# EUROPEAN PATENT APPLICATION

(11) **EP 3 315 916 A1**
(43) Date of publication of application: **02.05.2018**
(21) Application number: 16196566.0
(22) Date of filing: 31.10.2016
(51) Int. Cl.: G01C 23/00, B64D 43/00, G05D 1/02, G05D 1/04, G06F 3/0484

(54) **NAVIGATION DEVICE FOR SELECTION OF BASIC AUTO FLIGHT MODES, NAVIGATION SYSTEM AND AIRCRAFT PROVIDED THEREWITH**

(71) Applicant: Stichting Nationaal Lucht- en Ruimtevaart Laboratorium, 1059 CM Amsterdam (NL)
(72) Inventor: ARENTS, Roy Robert David, 1011 TG Amsterdam (NL); ROUWHORST, Wilhelmus Fredericus Jacobus Antonius, 1067 DC Amsterdam (NL); SUIJKERBUIJK, Henrica Catharina Henrica, 1069 MN Amsterdam (NL); VERHOEVEN, Ronald Petrus Maria, 1092 VV Amsterdam (NL)
(74) Representative: De Vries & Metman

(57) **Abstract**

A navigation device for selection of the basic auto flight modes heading, speed, altitude and vertical speed of an aircraft is provided, with a navigation display that can cooperate with a logic for providing a horizontal flight path representation and with a vertical situation display that can cooperate with a logic for providing a vertical flight path representation. The invention is based upon the recognition that an effective method of constructing a more intuitive and easy-to-use navigation device is the use of a so-called direct manipulation style of interaction between the navigation device and pilots. The logic is adapted for providing a graphic representation of the respective basic auto flight modes in the navigation display and/or in the vertical situation display, wherein the navigation display and/or vertical situation display with corresponding logic are adapted for receiving input for amending the respective graphic representation for thus selecting respective ones of the desired basic auto flight modes. The graphic representation in both types of displays is preferably (but not solely) a vector, which in the navigation display is representative for the selected heading and the selected speed of the aircraft, and which in the vertical situation display is representative for the selected vertical speed and\or flight path angle, as well as for the selected altitude (or Flight Level).

## Description

In a first aspect the invention relates to a navigation device for selection of the basic auto flight modes heading, speed, altitude and vertical speed of an aircraft, with a navigation display that can cooperate with a logic for providing a horizontal flight path representation and with a vertical situation display that can cooperate with a logic for providing a vertical flight path representation.

When an aircraft is flying in a mode in which the aircraft guidance is coupled to a flight management system (sometimes referred to as flying in "managed mode") in which, thus, the basic auto flight modes are determined by the flight management system, situations may occur in which pilots wish to select other basic auto flight modes, such that the aircraft will be flying in a mode in which the aircraft guidance is not coupled to the flight management system but in which the aircraft guidance is performed by the pilots themselves (sometimes referred to as flying in "selected mode"). Based upon the selected basic auto flight modes the aircraft (more specifically its flight guidance, among which the auto pilot, and the flight management system) then will respond (in a manner which may depend on a number of factors which are not relevant here for understanding the teaching of the present invention, and thus will not be elucidated further).

In accordance with a state of the art as presently used in Airbus type of aircraft, the input of basic auto flight modes is performed using independent selector knobs on the Flight Control Unit located on the cockpit glare shield. The Flight Control Unit has four selector knobs for selection of speed, heading, altitude and vertical speed with corresponding numeric indications of the respective basic auto flight modes. Each selector knob can be rotated, pushed in, and pulled out. In order to arm or engage the "managed" guidance mode (as defined by the flight management system), the associated selector knob needs to be pushed. For example to have a "managed" speed, the speed knob has to be pushed in. In order to engage a "selected" guidance mode, the pilot turns the selector knob to set the desired value (which can be read from the numeric indication), and then pulls the knob out to engage the selected guidance mode with its target value equal to the selected value.

It is noted that, as known per se, the navigation display of the navigation device and the vertical situation display may be shown (on a so-called navigation cockpit display) in different manners: one may be maximised while the other is minimised while allowing to change the view, or both may be maximised at the same time.

It is an object of the present invention to provide an alternative navigation device allowing to select the basic auto flight modes in a more intuitive and easy-to-use manner.

Thus, in accordance with a first aspect of the present invention the navigation device is characterized in that the logic is adapted for providing a graphic representation of the respective basic auto flight modes in the navigation display and/or in the vertical situation display and wherein the navigation display and/or vertical situation display with corresponding logic are adapted for receiving input for amending the respective graphic representation for thus selecting respective ones of the desired basic auto flight modes.

The invention is based upon the recognition that an effective method of constructing a more intuitive and easy-to-use navigation device is the use of a so-called direct manipulation style of interaction between the navigation device and pilots. The intention of direct manipulation is to allow the pilots to manipulate the graphic representation of the respective basic auto flight modes presented to them, using actions that correspond at least loosely to manipulation of a physical objects. An example of direct manipulation is resizing a graphical shape by dragging its corners or edges. In accordance with the present invention it is proposed to use the direct manipulation interaction style for selection of the basic auto flight modes on a navigation display and on a vertical situation display.

In one embodiment the navigation display and/or vertical situation display for receiving the input comprise touch screens. As a result the input may be received directly through the pilots moving fingers over the touch screen. Recently the use of touch screen technology becomes more and more common in aircraft cockpits, and is a preferred embodiment.

However, as an alternative it is possible too that the navigation display and/or vertical situation display with corresponding logic are adapted for receiving input through a mouse or trackball.

In one embodiment of the navigation device according to the present invention the navigation display is adapted for providing a horizontal flight path representation within a circular grid comprising an outer compass rose surrounding concentric distance circles, wherein the graphic representation is a vector in the navigation display which is representative for the selected heading and the selected speed of the aircraft and wherein the navigation display and logic are adapted for receiving input for a direct manipulation of the vector for changing its orientation and/or its length for directly selecting the heading and/or speed, respectively.

It is noted that within the present context a selection of at least one of heading, speed, altitude and vertical speed means both a selection of the associated guidance mode and a manipulation of the selected value.

When pilots, in accordance with this embodiment, for example wish to select another speed, it is sufficient to change the length of the vector (in case of a touch screen this, for example, may be accomplished by dragging the tip of the vector). Likewise the vector may be dragged to another orientation for selecting a new heading.

In one embodiment, then, the logic may be adapted for allowing a successive change, and for preventing a simultaneous change, of the orientation and length of the vector in the navigation display when the change of length of the vector is below a defined limit.

When, for example, a different orientation of the vector has to be selected there is a risk that at the same time a slight, unwanted, change of the length of the vector (and thus of the selected speed) occurs. In accordance with this embodiment such a slight change has no effect.

It is possible that the logic is adapted for at the compass rose displaying a mark representative for the selected heading and wherein the logic further is adapted for allowing said mark to be moved along the compass rose for changing the orientation of the vector for selecting the heading. In accordance with this embodiment an alternative manner for changing the orientation of the vector is provided (apart from manipulating the vector directly, such as dragging its tip).

In another embodiment the vertical situation display is adapted for providing a vertical flight path representation within a rectangular grid comprising a ground level and a horizontal altitude line and subsequent vertical distance lines between two vertical axes at opposite sides of the rectangular grid which represent (on the left side) the altitude (of Flight Level -FL- depending on the actual value) and (on the right side) the vertical speed, respectively, wherein the graphic representation is a vector in the vertical situation display which is representative for the selected altitude and the selected vertical speed of the aircraft and wherein the vertical situation display and logic are adapted for receiving input for achieving one of the following direct manipulations: changing the orientation of the vector for selecting the vertical speed only, selecting and representing the altitude only, or simultaneously changing the orientation of the vector for selecting the vertical speed and selecting and representing the altitude.

When pilots, in accordance with this embodiment, for example wish to select another vertical speed, it is sufficient to change the orientation (inclination) of the vector (in case of a touch screen this, for example, may be accomplished by a movement of a finger over the touch screen).

In one embodiment the logic, for receiving input for changing the orientation of the vector for selecting the vertical speed only, may be adapted for, at the vertical axis which represents the vertical speed, displaying a mark representative for the selected vertical speed and wherein the logic further is adapted for allowing said mark to be moved along said vertical axis for changing the orientation of the vector for selecting the vertical speed.

This offers an alternative manner for selecting a vertical speed apart from directly manipulating the vector.

Preferably, then, the logic is adapted for displaying a line connecting the mark with the vector. This enhances the manner in which information about the selected vertical speed is provided to the pilots.

In one embodiment the logic, for receiving input for selecting and representing the altitude only, is adapted for, at the vertical axis which represents the altitude, displaying a mark representative for the selected altitude and wherein the logic further is adapted for allowing said mark to be moved along said vertical axis for selecting the altitude while in a corresponding manner moving the horizontal altitude line.

In yet another embodiment the logic, for receiving input for simultaneously changing the orientation of the vector for selecting the vertical speed and selecting and representing the altitude, is adapted for, in the rectangular grid, defining a point from which a first inclined line extends towards the origin of the vector, which first inclined line is representative for the selected vertical speed, and wherein a second horizontal line extends from said point, which second horizontal line is representative for the selected altitude.

The said point again may be manipulated by the pilots for changing the selected vertical speed and for changing the selected altitude.

In one embodiment the logic is adapted for displaying on the navigation display a numeric representation of the heading with, and preferably between, two virtual input buttons for indirectly selecting the heading and a numeric representation of the speed along a speed scale with, and preferably between, two virtual input buttons for indirectly selecting the speed and/or wherein the logic further is adapted for displaying on the vertical situation display a numeric representation of the altitude with, and preferably between, two virtual input buttons for indirectly selecting the altitude and a numeric representation of the vertical speed with, and preferably between, two virtual input buttons for indirectly selecting the vertical speed, wherein a direct manipulation occurs with respective first steps for each of the corresponding heading, speed, altitude and vertical speed and wherein an indirect selection with the input buttons occurs with respective second steps for each of the heading, speed, altitude and vertical speed, wherein the respective first and second steps are configurable and wherein preferably the second steps are smaller than the first steps.

Taking as an example the speed, the numeric representation shows the selected speed. Thus, when the length of the vector in the navigation display is changed to select a different speed, the numeric representation will change correspondingly. The manner in which a change of the speed is allowed through such a direct manipulation of the vector is determined by the (settable) first step size (and, for example is 5 knots). After thus selecting a speed, this speed may be fine-tuned by using the input buttons for an indirect selection (allowing a change with a settable second step size, for example 1 knot).

In one embodiment the navigation display and logic are adapted for receiving input for changing the range defined by the distance circles in the navigation display and/or wherein the vertical situation display and logic are adapted for receiving input for changing the range defined by the vertical distance lines in the vertical situation display and wherein the logic is adapted for automatically changing the other of the ranges when one of the ranges is thus changed. This range change may be accomplished, for example, by a pinching or spreading movement of two fingers (in case of a touch screen).

In a second aspect the present invention relates to a navigation assembly comprising two navigation devices according to the present invention. Generally these navigation devices will be located in front of two different pilots. In accordance with the present invention, then, the logic is adapted for, when one of the navigation devices is receiving input for amending the respective graphic representation of the respective basic auto flight modes in its navigation display and/or in its vertical situation display, preventing the other of the navigation devices from receiving input for amending the respective graphic representation of the respective basic auto flight modes in its navigation display and/or in its vertical situation display.

Thus only one pilot may provide input at the same time, while the other pilot then is locked out from inputting (although the other pilot generally will be able to see the changes (newly selected basic auto flight modes and inputs) provided by the one pilot on the navigation display/vertical situation display in front of him/her).

Finally, the invention also relates to an aircraft provided with a navigation device or a navigation assembly in accordance with the present invention.

Hereinafter the invention will be elucidated while referring to the drawings, in which:
Figures 1-3 show examples of a navigation display;
Figures 4-7 show examples of a horizontal situation display, and
Figure 8 schematically shows a functional scheme.

It is noted that the functionalities described in the following all are incorporated in, or assisted by, logic which is designed to cooperate with parts of the navigation device and as such will not be elucidated in detail.

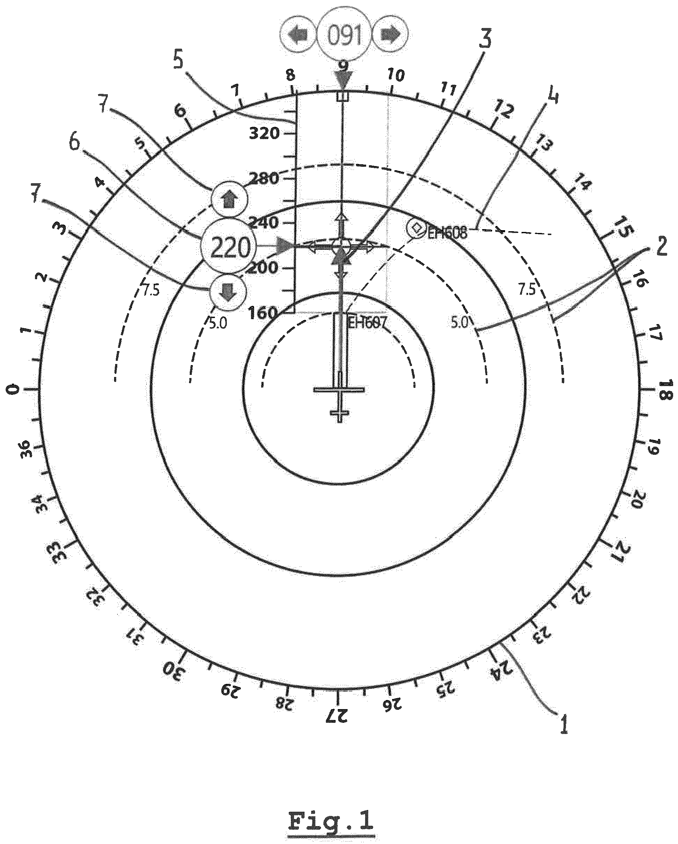

When a pilot wishes to select a speed or heading, firstly the representation of the navigation display has to be elected (if not yet represented) on the navigation cockpit display. This for example may be achieved by pressing an aircraft symbol, and as a result the navigation display is shown as illustrated in figure 1. As shown, the navigation display is adapted for providing a horizontal flight path representation within a circular grid comprising an outer compass rose 1 surrounding concentric distance circles 2, wherein a vector 3 provides a graphic representation representative for a heading (orientation of the vector) and a speed (length of the vector) of the aircraft. In the navigation display further a horizontal flight path 4 will be shown which the aircraft in a managed flight mode will follow.

It is noted that the range of the navigation display (thus the actual distance represented between two concentric distance circles 2) may be adjusted (this also having a corresponding effect on the range of the vertical situation display to be elucidated later).

A pilot can select a new speed in the navigation display by changing the length of the vector 3 to the desired speed value by sliding the top of the vector along its orientation (for example with a finger or using a cursor). Speed increment/decrement steps along the speed band 5 are configurable, and for example are set at 5 knots. Once a new speed value is being selected this appears inside a circle alongside of the speed tape 5 as a numeric representation 6. This representation 6 is located between two virtual input buttons 7 (with up and down arrows). Depending on finger position (or position of a mouse-controlled cursor) this circle plus arrows may appear on the left or the right side of the speed vector 3. The orientation of this representation is such that it always remains directly readable and not turns upside down when the heading angle is different. The virtual input buttons 7 allow for fine control of the selected speed with configurable increment/decrement steps that for example are set at 1 knot.

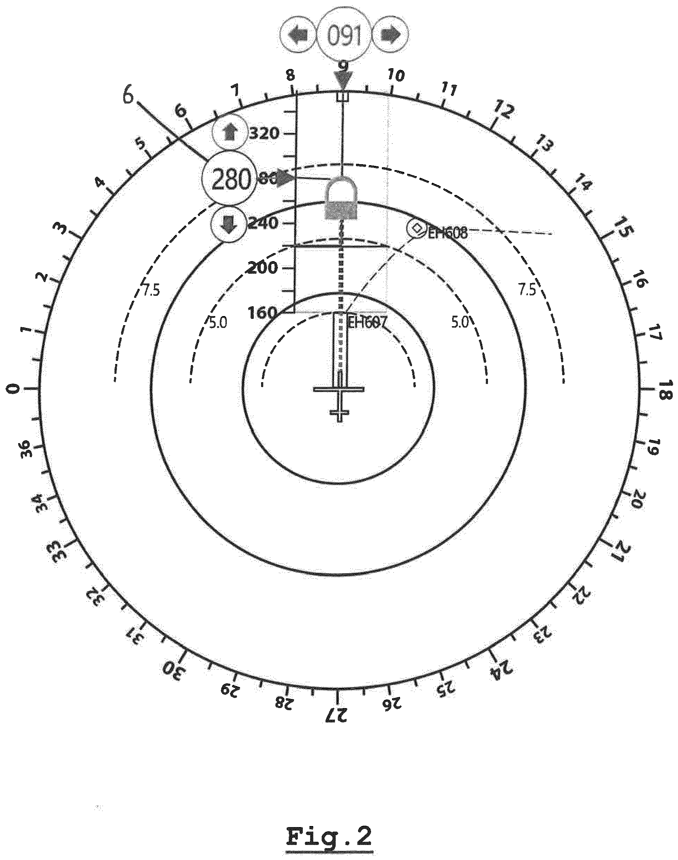

In the example shown in Figure 2 the new selected speed is being set at 280 knots. The vector representation is dashed when the selection activity is still taking place. When the selected value is set in a stable manner and no further input is provided, the vector representation becomes solid. To only change the speed and not the heading the finger (or cursor) has to remain within a dead band 28 around the speed vector 3 (not represented to scale).

A pilot also can adjust the heading in the navigation display by changing the orientation of the speed vector 3 to the desired heading by sliding the top of the vector 3 perpendicular to its orientation. When one wants merely a heading change, without changing the speed, one (in the illustrated embodiment) must make sure to stay inside a circular band 8 (not represented to scale) which defines a limit below which no speed change will occur while at the same time changing the heading.

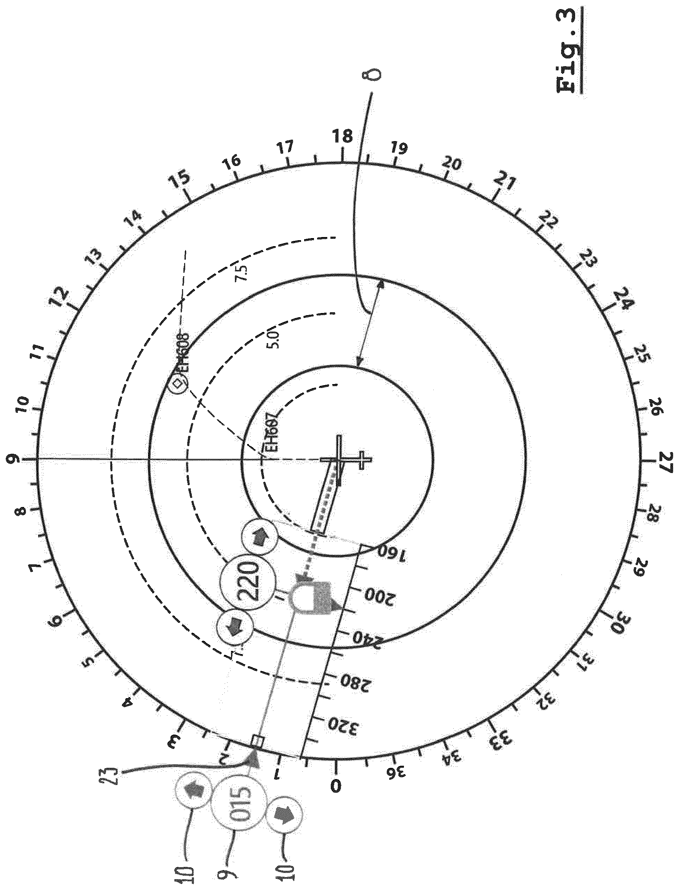

In figure 3 a selected heading of 15 degrees is shown, which also is shown in a numeric representation 9 between two virtual input buttons 10.

Alternatively one can slide (with the finger or a cursor) for an already set speed the vector 3 alongside the compass rose 1 using a mark 23. As before, the orientation of the new heading value is such that it always remains directly readable and not turns upside down when the heading angle is modified.

Heading increment/decrement steps (by a direct manipulation of the vector 3) along the heading band are configurable, and for example are set at 5 degrees. The virtual input buttons 10 allow for fine control with configurable increment/decrement steps that for example are set at 1 deg.

It is noted that in this example the speed (compared to figure 1) has not changed due to the configurable dead band zone 8 around the vector. However, the navigation device according to the invention also may allow to adjust the speed and heading simultaneously by changing the length and orientation of the vector 3 at the same time by moving the point of the vector outside of the two dead bands 8 and 28. This is a fast and intuitive way of acting (for example in accordance with air traffic control directives). This functionality is truly innovative and is not provided on conventional flight control unit panels.

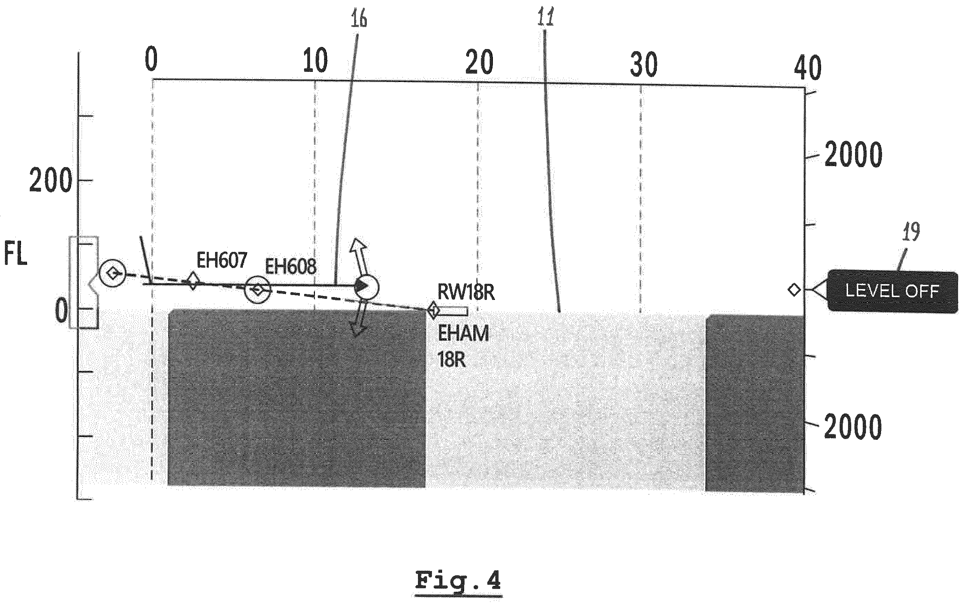

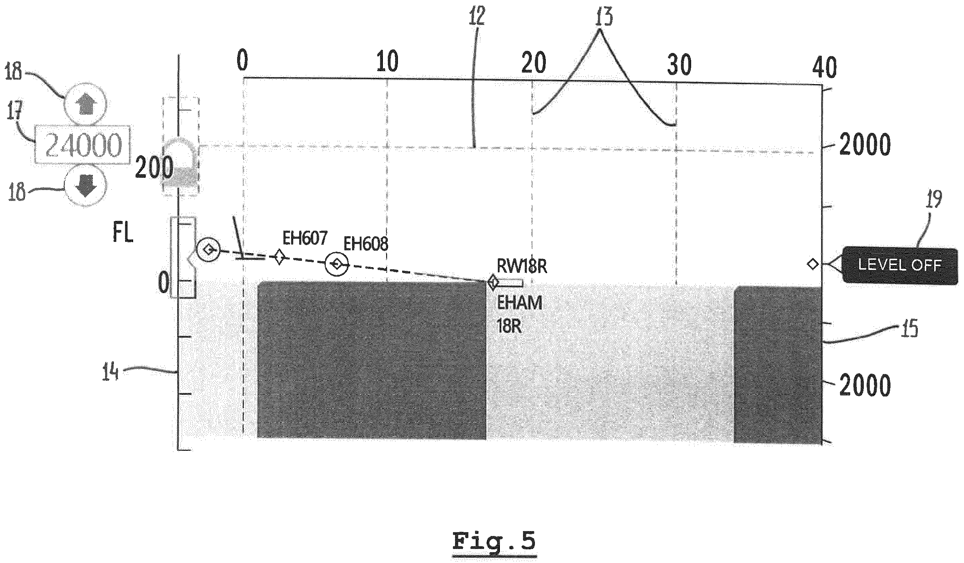

When a pilot wishes to select the altitude and/or vertical speed, the view has to be changed to the vertical situation display (if not yet shown on the navigation cockpit display; it is conceivable that latter shows the navigation display together with the horizontal situation display, both maximised or one maximised and one minimised), for example as illustrated in figure 4. The vertical situation display is adapted for providing a vertical flight path representation within a rectangular grid comprising a ground level 11 and a horizontal altitude line 12 (see figure 5) and subsequent vertical distance lines 13 between two vertical axes 14,15 at opposite sides of the rectangular grid which represent the altitude (or Flight Level FL) and vertical speed, respectively.

The horizontal range of the vertical situation display (thus the actual distance represented between two distance lines 13) can be adjusted (this is coupled to the change of range of the navigation display). One can also adjust the vertical range of the altitude scale without affecting the horizontal range. The range of the vertical speed is automatically rescaled when adjusting the horizontal or vertical range of the vertical situation display. This rescaling is configurable, may be pre-programmed and may be dependent on different flight phases.

To start the altitude and/or vertical speed selection on the vertical situation display it has to show the view illustrated in figure 4. This view may be selected, for example, by pressing an aircraft symbol. The vector 16 originating from the aircraft symbol represents the current longitudinal state of the aircraft. The length is a representation of speed, implying the speed value, its orientation is a representation of the associated flight path angle (or vertical speed as they are connected).

Since the speed is adjusted in the navigation display, it is assumed here that only an adjustment of the altitude target and the vertical speed is carried out in the vertical situation display.

When one wants to solely select (adjust) the altitude target (as graphically represented by the altitude line 13), one has to drag a finger (or cursor) outside the vertical situation display along the left vertical axis 14 showing the altitude scale. When dragging vertically along the altitude scale, a new target altitude is selected (in figure 5 for example 24000 feet, equivalent to FL240) and shown in a numeric representation 17 between virtual input buttons 18 for a fine control. Altitude increment/decrement steps (according to the direct manipulation) along the altitude (or flight level) scale are configurable (and also depend on flight phase). The increment/decrement steps (according to the indirect selection) using the buttons 18 are likewise configurable.

As can be observed there also exists a button for a dedicated Level-off mode illustrated at 19. Pressing this button 19 will immediately bring the vertical speed to zero and level-off the aircraft to the nearest attainable altitude\flight level.

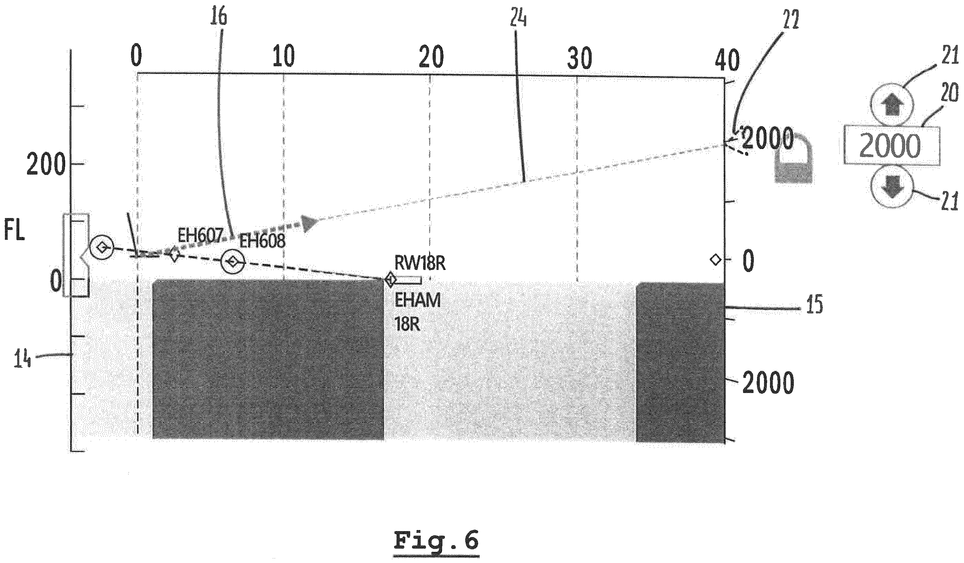

When one wants to solely select (adjust) the vertical speed, one has to drag a mark 22 representative for the vertical speed with a finger (or cursor) outside the vertical situation display along the vertical axis 15 showing the vertical speed scale (see figure 6). When dragging vertically along the vertical speed scale, one adjusts the target value in ft/min (while changing the inclination of the vector 16), which again is shown in a numeric representation 20 between virtual input buttons 21 (the latter again for a fine control). Vertical speed increment/decrement steps for the direct manipulation along the scale are configurable, as are the increment/decrement steps for the fine control using the buttons 21. Depending on the range of the altitude scale the altitude step size may be one flight level or 100 ft. The vertical speed step size may be 100 ft/min.

In figure 6 an example is shown of selecting a vertical speed of 2000 ft/min. A line 24 representative for the flight path connects the mark 22 to the vector 16.

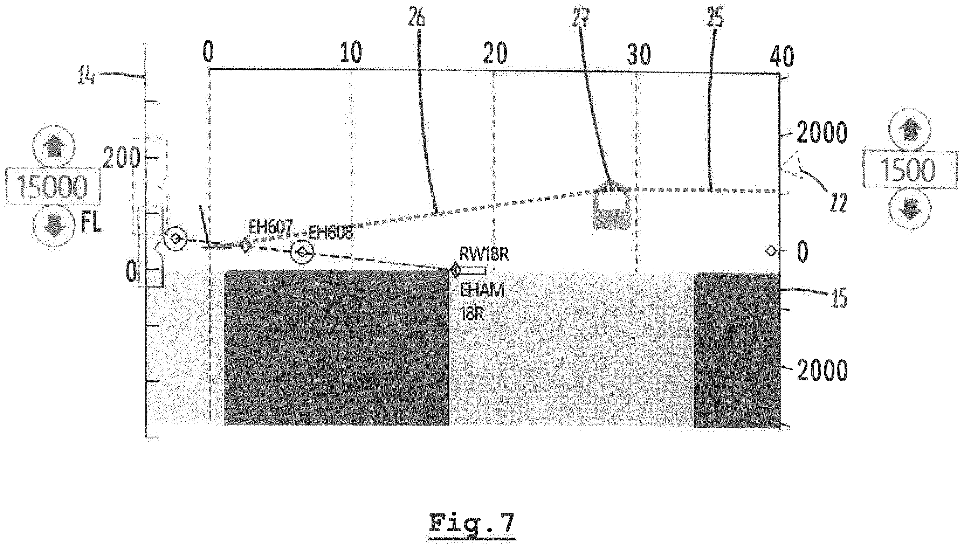

Referring to figure 7 one also can select (adjust) a combination of altitude and vertical speed by manipulating the vector 16 as follows: when moving the tip of the vector around, both a horizontal line 25 and an inclined line 26 appear (the latter in fact being a part of line 24 mentioned above and, when prolonged towards axis 15 arriving at mark 22 representative for the vertical speed) meeting each other at intersection 27.

In this way the vertical situation display supports an innovative way of choosing a new altitude target, combined with how and when the aircraft should reach this altitude: when the intersection 27 is moved along a horizontal line of an altitude target (like 15000 feet as represented by horizontal line 25 in figure 7), it is possible to select if one wants to reach this altitude earlier (i.e. within a shorter range and therefore at higher values of vertical speed) or later (i.e. after a longer range and thus at lower vertical speed). With other words, the so-called Top-of-Descent (TOD) and/or Top-of-Climb (TOC) can be directly manipulated.

The other way around, when one moves the intersection 27 along the inclined line 26 (meaning that the vertical speed is maintained at its present value), one can decide at what altitude target the aircraft is meant to level off; if one wants to reach (set) a higher altitude, it now is directly visible that the aircraft needs more range to reach it (i.e. one should move the intersection 27 further to the right and up in accordance with a prolongation of the inclined line 26). Clearly every combination of altitude targets and vertical speeds (or range) are possible.

It is noted that in case the vector is controlled in a combined way inside the vertical situation display and the vector tip is moved outside either the left side (altitude/FL) scale or right side (vertical speed) scale, the input control logic transitions to a single axes control, implying to either a control of the altitude scale with fixed vertical speed when moving outside the left axis, or to control of a vertical speed at constant altitude when moving outside the right-side axis.

In this way a pilot can directly manipulate what physically will happen with the aircraft instead of merely altering some numbers (as, for example, is the case in the state of the art using turning selector knobs).

Once, in accordance with the above, the desired basic auto flight modes have been selected, flight mode selection switches of any kind may be used to switch between the "managed" and "selected" flight modes.

It is possible that two navigation devices for two pilots are combined into a navigation assembly. In such a case, preferably, the logic is adapted for, when one of the navigation devices is receiving input (from one of the pilots) for amending the respective graphic representation of the respective basic auto flight modes in its navigation display and/or in its vertical situation display, preventing the other of the navigation devices from receiving input (from the other pilot) for amending the respective graphic representation of the respective basic auto flight modes in its navigation display and/or in its vertical situation display. This means that when one pilot initiates the selected guidance modes (navigation display or horizontal situation display) and opens it with a touch on the aircraft symbol for further direct manipulation activities, the same guidance mode may be opened in front of the other pilot such that this latter pilot can monitor the inputs of the one pilot for cross checking, but him/herself cannot achieve any input for selecting and using the basic auto flight modes.

Finally it is noted that the present invention generally also will require an interface to the following aircraft functions:
- Managing Flight Guidance to control lateral and vertical guidance modes and selecting target values
- Acquiring 'Air & Inertial data' to obtain current aircraft state.
- Managing the flight (Flight Management System) to obtain route and profile related information.

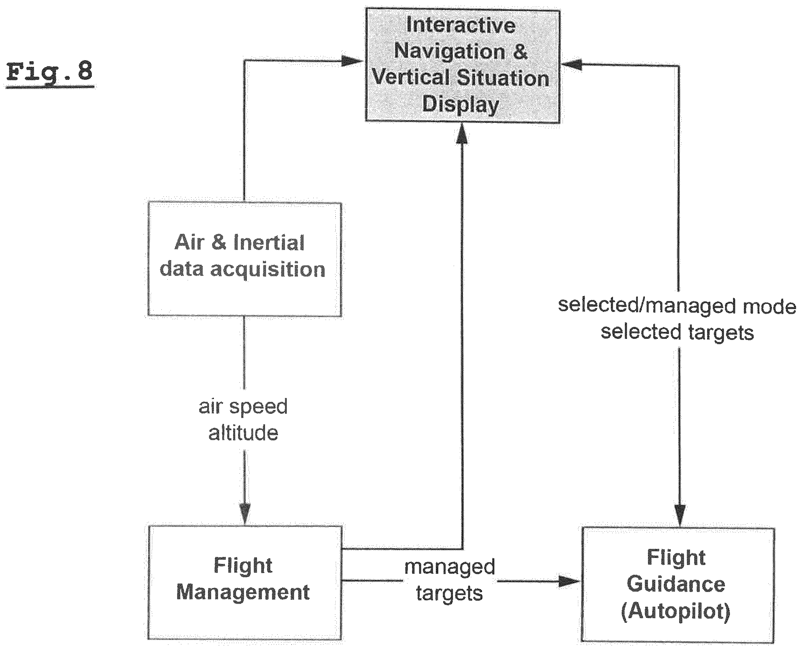

In Figure 8 these interfaces are schematically shown in relation to other aircraft systems. The present invention moves functionality from the Flight Mode Panel to the navigation display and vertical situation display, and does not have impact on functionality or interfaces of other aircraft systems.

The invention is not limited to the embodiments described which may be varied widely within the scope of the invention as defined by the appending claims.

## Claims

1. Navigation device for selection of the basic auto flight modes heading, speed, altitude and vertical speed of an aircraft, with a navigation display that can cooperate with a logic for providing a horizontal flight path representation and with a vertical situation display that can cooperate with a logic for providing a vertical flight path representation, **characterized in that** the logic is adapted for providing a graphic representation of the respective basic auto flight modes in the navigation display and/or in the vertical situation display and wherein the navigation display and/or vertical situation display with corresponding logic are adapted for receiving input for amending the respective graphic representation for thus selecting respective ones of the desired basic auto flight modes.

2. Navigation device according to claim 1,
wherein the navigation display and/or vertical situation display for receiving the input comprise touch screens.

3. Navigation device according to claim 1,
wherein the navigation display and/or vertical situation display with corresponding logic are adapted for receiving input through a mouse or trackball.

4. Navigation device according to any of the previous claims, wherein the navigation display is adapted for providing a horizontal flight path representation within a circular grid comprising an outer compass rose surrounding concentric distance circles, wherein the graphic representation is a vector in the navigation display which is representative for the selected heading and the selected speed of the aircraft and wherein the navigation display and logic are adapted for receiving input for a direct manipulation of the vector for changing its orientation and/or its length for directly selecting the heading and/or speed, respectively.

5. Navigation device according to claim 4,
wherein the logic is adapted for allowing a successive change, and for preventing a simultaneous change, of the orientation and length of the vector in the navigation display when the change of length of the vector is below a defined limit.

6. Navigation device according to claim 4 or 5, wherein the logic is adapted for at the compass rose displaying a mark representative for the selected heading and wherein the logic further is adapted for allowing said mark to be moved along the compass rose for changing the orientation of the vector for selecting the heading.

7. Navigation device according to any of the previous claims, wherein the vertical situation display is adapted for providing a vertical flight path representation within a rectangular grid comprising a ground level and a horizontal altitude line and subsequent vertical distance lines between two vertical axes at opposite sides of the rectangular grid which represent the altitude and vertical speed, respectively, wherein the graphic representation is a vector in the vertical situation display which is representative for the selected altitude and the selected vertical speed of the aircraft and wherein the vertical situation display and logic are adapted for receiving input for achieving one of the following direct manipulations: changing the orientation of the vector for selecting the vertical speed only, selecting and representing the altitude only,
or simultaneously changing the orientation of the vector for selecting the vertical speed and selecting and representing the altitude.

8. Navigation device according to claim 7,
wherein the logic, for receiving input for changing the orientation of the vector for selecting the vertical speed only, is adapted for, at the vertical axis which represents the vertical speed, displaying a mark representative for the selected vertical speed and wherein the logic further is adapted for allowing said mark to be moved along said vertical axis for changing the orientation of the vector for selecting the vertical speed.

9. Navigation device according to claim 8,
wherein the logic is adapted for displaying a line connecting the mark with the vector.

10. Navigation device according to any of the claims 7-9, wherein the logic, for receiving input for selecting and representing the altitude only, is adapted for, at the vertical axis which represents the altitude, displaying a mark representative for the selected altitude and wherein the logic further is adapted for allowing said mark to be moved along said vertical axis for selecting the altitude while in a corresponding manner moving the horizontal altitude line.

11. Navigation device according to any of the claims 7-10, wherein the logic, for receiving input for simultaneously changing the orientation of the vector for selecting the vertical speed and selecting and representing the altitude, is adapted for, in the rectangular grid, defining a point from which a first inclined line extends towards the origin of the vector, which first inclined line is representative for the selected vertical speed, and wherein a second horizontal line extends from said point, which second horizontal line is representative for the selected altitude.

12. Navigation device according to any of the previous claims, wherein the logic is adapted for displaying on the navigation display a numeric representation of the heading with, and preferably between, two virtual input buttons for indirectly selecting the heading and a numeric representation of the speed along a speed scale with, and preferably between, two virtual input buttons for indirectly selecting the speed and/or wherein the logic further is adapted for displaying on the vertical situation display a numeric representation of the altitude with, and preferably between, two virtual input buttons for indirectly selecting the altitude and a numeric representation of the vertical speed with, and preferably between, two virtual input buttons for indirectly selecting the vertical speed, wherein a direct manipulation occurs with respective first steps for each of the corresponding heading, speed, altitude and vertical speed and wherein an indirect selection with the input buttons occurs with respective second steps for each of the heading, speed, altitude and vertical speed, wherein the respective first and second steps are configurable and wherein preferably the second steps are smaller than the first steps.

13. Navigation device according to any of the claims 4-6 in combination with any of the claims 8-11, wherein the navigation display and logic are adapted for receiving input for changing the range defined by the distance circles in the navigation display and/or wherein the vertical situation display and logic are adapted for receiving input for changing the range defined by the vertical distance lines in the vertical situation display and wherein the logic is adapted for automatically changing the other of the ranges when one of the ranges is thus changed.

14. Navigation assembly comprising two navigation devices according to any of the previous claims, wherein the logic is adapted for, when one of the navigation devices is receiving input for amending the respective graphic representation of the respective basic auto flight modes in its navigation display and/or in its vertical situation display, preventing the other of the navigation devices from receiving input for amending the respective graphic representation of the respective basic auto flight modes in its navigation display and/or in its vertical situation display.

15. Aircraft provided with a navigation device according to any of the claims 1-13 or provided with a navigation assembly according to claim 14.
